# FASCICULE DE BREVET EUROPEEN

(11) **EP 0 958 849 B1**
(45) Date de publication et mention de la délivrance du brevet: **13.10.2004**
(21) Numéro de dépôt: 99401216.9
(22) Date de dépôt: 20.05.1999
(51) Int. Cl.: B01D 21/24, B01D 21/02, B08B 9/08

(54) **Décanteur lamellaire et dispositif de lavage des lamelles du décanteur**
Lamellennachklärbecken und Nachklärbeckenlamellenwaschvorrichtung
Lamellar clarifier and clarifier lamellae washing device

(30) Priorité: 22.05.1998 FR 9806465
(43) Date de publication de la demande: 24.11.1999
(73) Titulaire: STEREAU, 78430 Louveciennes (FR)
(72) Inventeur: Riotte, Michel, 78370 Plaisir (FR); Hallet, Luc, 77500 Chelles (FR)
(74) Mandataire: Ahner, Francis

(56) Documents cités:
- WO-A-94/11081
- DE-A- 3 331 238
- FR-A- 2 725 916
- US-A- 2 502 142
- US-A- 3 669 741
- US-A- 4 028 249
- US-A- 4 045 344
- US-A- 4 514 303

## Description

La présente invention concerne de manière générale la séparation liquide/solide par décantation lamellaire, et notamment le traitement des eaux usées, des eaux industrielles ou encore des eaux potables

Elle concerne plus particulièrement un dispositif de lavage de lamelles ou d'éléments tubulaires d'un décanteur utilisé pour la séparation liquide/solide et en particulier pour le traitement des eaux.

Elle concerne également un procédé de nettoyage de lamelles ou d'éléments tubulaires d'un décanteur, à l'aide d'un tel dispositif de lavage, ainsi qu'un décanteur lamellaire pour le traitement des eaux.

Depuis plusieurs années, les décanteurs lamellaires sont largement utilisés notamment dans des installations d'épuration d'eaux usées, d'eaux industrielles ou dans des installations d'obtention d'eaux potables.

L'exploitation de tels décanteurs lamellaires, pose notamment certaines difficultés liées à l'encrassement des lamelles qui nécessitent un nettoyage périodique imposant la vidange au moins partielle de l'eau en dessous des lamelles dans lesdits décanteurs.

Le lavage desdites lamelles s'effectue alors par projection d'eau sous haute pression ou équivalent.

Il existe actuellement des dispositifs de lavage de lamelles ou d'éléments tubulaires de décanteur, se présentant sous la forme d'une tuyauterie fixe, disposée sous les lamelles ou éléments tubulaires du décanteur et alimentée en air comprimé ou surpressé.

Cette tuyauterie présente des trous d'évacuation qui laissent échapper l'air comprimé ou surpressé vers la partie supérieure du décanteur, cet air décrochant au passage les boues accrochées sur lesdites lamelles.

Toutefois, de tels dispositifs de lavage utilisent un débit d'air comprimé important ce qui n'est pas pratique et est surtout très coûteux.

Pour améliorer l'efficacité de tels dispositifs de lavage, il a déjà été prévu d'utiliser des rampes de distribution d'air fixées sur des ponts racleurs de décanteurs sur lesquels est embarqué un compresseur ou un surpresseur de lavage. Lorsque le pont racleur dispose déjà d'air, soit comprimé pour sa traction, soit surpressé pour l'extraction des boues, celui-ci est utilisé pour le lavage dans une phase spécifique d'aller-retour du pont.

Toutefois, de tels dispositifs nécessitent que les décanteurs utilisent un pont racleur ou un pont suceur, et la rampe de distribution d'air utilisée pour le lavage n'est pas indépendante d'un tel pont, cet ensemble est alors relativement complexe et représente un coût de fabrication très élevé.

WO 94/11081 décrit un appareil de sédimentation du type à lamelles qui mentionne la possibilité de comporter un dispositif de lavage desdites lamelles, ledit dispositif étant différent du dispositif de lavage selon la présente invention.

Afin de pallier aux inconvénients de l'état de la technique précité, l'invention propose un nouveau dispositif de lavage de lamelles ou d'éléments tubulaires d'un décanteur utilisé pour la séparation liquide/solide et en particulier pour le traitement des eaux, qui soit indépendant et plus particulièrement adapté pour le lavage des lamelles ou des éléments tubulaires des décanteurs ne possédant pas de pont racleur ou de pont suceur, ce dispositif de lavage étant simple et économique à réaliser.

Plus particulièrement, selon l'invention, le dispositif de lavage comprend :
- au moins une rampe de distribution de fluide de lavage sous pression, disposée en dessous et à proximité des lamelles ou des éléments tubulaires, ladite rampe étant apte à coulisser sur des moyens supports comprenant au moins deux câbles de support s'étendant sur la longueur du décanteur et maintenus sous tension au moins à une extrémité.
- des moyens pour déplacer ladite rampe le long du décanteur comprenant au moins un câble relié à un système de treuil actionnable manuellement ou automatiquement et
- des moyens d'alimentation en fluide de lavage sous pression de la rampe, couplés à cette dernière.

Avantageusement la rampe de distribution s'étend transversalement à la direction longitudinale du décanteur et sur toute sa largeur. Le fluide de lavage est avantageusement de l'air comprimé ou surpressé, les moyens d'alimentation en air compressé ou comprimé ou surpressé comprenant une tuyauterie d'alimentation associée à un système d'enroulement ou de guirlande et une source de production d'air comprimé ou surpressé. La rampe d'alimentation se présente avantageusement sous la forme d'un tube ou d'un ensemble de tubes pourvu(s) en partie inférieure de trous d'évacuation de fluide de lavage sous pression, les trous d'évacuation étant régulièrement répartis sur toute la longueur de la rampe. La position des trous d'évacuation est avantageusement prévue pour éviter tout colmatage par les boues séparées des lamelles descendant au fond du décanteur où se trouve le dispositif de lavage. Les trous d'évacuation de fluide sous pression sont avantageusement espacés d'une distance comprise entre 5 et 20 cm et présentent un diamètre compris entre 1 et 7 mm, préférentiellement de l'ordre de 1,5 mm.

La présente invention propose également un procédé de lavage des lamelles ou d'éléments tubulaires d'un décanteur utilisé pour la séparation liquide/solide et en particulier pour le traitement des eaux, à l'aide du dispositif de lavage précité, qui comprend les étapes suivantes :
- arrêt de l'arrivée d'eau sur le décanteur,
- injection de fluide sous pression dans la rampe de distribution du dispositif de lavage.
- mise en mouvement de ladite rampe de façon à ce qu'elle effectue au moins deux aller-retour entre les deux extrémités longitudinales du décanteur,
- mise en repos du décanteur pendant une durée comprise entre 10 et 30 mn environ pour permettre une décantation des boues séparées des lamelles ou des éléments tubulaires du décanteur, et
- extraction des boues décantées et remise en fonctionnement du décanteur.

Le procédé selon l'invention permet avantageusement de réduire considérablement le temps de lavage d'un décanteur lamellaire, pour une efficacité maximum.

La description qui va suivre en regard du dessin annexé, donné à titre d'exemple non limitatif, fera bien comprendre en quoi consiste l'invention et comment elle peut être réalisée.

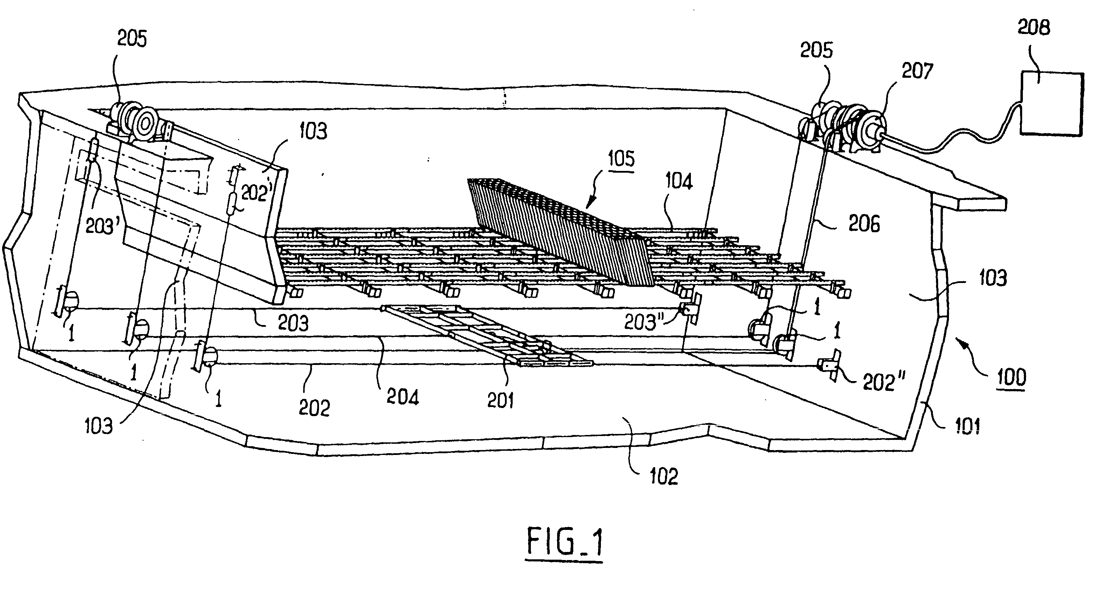

Sur le dessin annexé, la figure 1 est une vue schématique en perspective de l'intérieur d'un décanteur lamellaire, comprenant un dispositif de lavage selon l'invention.

Sur la figure 1, on a représenté un décanteur lamellaire 100, qui comporte ici une cuve de forme générale rectangulaire pourvue de parois latérales 103 et d'un fond 102. Cette cuve est ouverte en partie supérieure. Elle présente par exemple des dimensions de l'ordre de 20 m de largeur sur 25 m de longueur.

A l'intérieur de cette cuve est disposée environ à mi-hauteur, une pluralité d'éléments tubulaires 105 (dont une partie seulement est représentée) reposant sur un support horizontal 104. Ces éléments tubulaires 105 sont juxtaposés suivant la longueur du décanteur et présentent une inclinaison par rapport à l'horizontale comprise entre 50 et 60 degrés. Le support horizontal 104 est constitué par un ensemble de profilés et de crémaillères maintenant l'écartement des éléments tubulaires entre eux.

Ici, les éléments tubulaires présentent une hauteur de 1,8 m environ et un écartement de 7,5 cm.

Les éléments tubulaires 105 sont des éléments thermoformés à partir de plaques de polystyrène ou d'ABS par exemple, assemblées par des rivets plastiques. Il est prévu des renforts intégrés à la structure des éléments de façon à éviter les problèmes d'écrasement de ces derniers lors de vidange du décanteur

Bien entendu, selon une variante on peut prévoir à la place des éléments tubulaires, des lamelles du type bardage en PVC, de hauteur comprise entre 1 et 2,5 m et écartées de 5 cm environ.

En outre, le décanteur lamellaire 100 comporte en partie supérieure des goulottes de récupération profilées (ici non représentées) qui sont régulièrement réparties sur la longueur du décanteur et s'étendent sur toute sa largeur. Ces goulottes permettent de récupérer l'eau qui a été traitée.

L'eau à clarifier arrive par le fond du décanteur et remonte en partie supérieure en traversant les éléments tubulaires inclinés, de sorte que les particules contenues dans l'eau se déposent sur les parois des tubes ou des lamelles et glissent vers le fond du décanteur sous l'effet de la pesanteur.

L'eau clarifiée est recueillie en surface dans les goulottes de récupération. Les goulottes de récupération sont par exemple réalisées en inox. Elles présentent une forme spécifique comportant une quille qui offre une résistance mécanique très importante. Les éléments supports des éléments tubulaires sont assemblés par boulonnerie en acier inoxydable.

En outre, le décanteur lamellaire 100 comporte un dispositif de lavage de lamelles ou ici des éléments tubulaires 105, qui comprend une rampe de distribution 201 de fluide de lavage sous pression, disposée au-dessous et à proximité des éléments tubulaires 105. Cette rampe 201 est apte à coulisser sur des moyens supports 202, 203.

La rampe de distribution 201 est ici réalisée par un ensemble de tubes, elle s'étend horizontalement, transversalement à la direction longitudinale du décanteur et pratiquement sur toute sa largeur, c'est à dire pratiquement sur toute la largeur des éléments tubulaires juxtaposés. Ici, elle présente une longueur de l'ordre de 4,5 m. Chaque tube constituant la rampe d'alimentation 201 est pourvu en partie inférieure de trous d'évacuation du fluide de lavage sous pression, les trous d'évacuation étant régulièrement répartis sur toute la longueur de la rampe 201.

Chaque tube de la rampe de distribution comporte au moins une rangée de trous d'évacuation située sur la génératrice inférieure du tube en question. Il peut également être prévu plusieurs rangées parallèles de trous d'évacuation, écartées les unes des autres de manière à être réparties sur un secteur angulaire d'environ 60 degrés situé en dessous du plan médian chaque tube.

Les trous d'évacuation de fluide de lavage sous pression sont dans le cas typique espacés d'une distance comprise entre 5 et 20 cm et en particulier, dans l'exemple représenté, de 8 cm pour obtenir un débit de fluide sous pression compris entre 20 et 80 m3/h, et en particulier de 40 m³/h. Le fluide de lavage présente en sortie une pression d'environ 600.10² Pascal.

Les trous d'évacuation présentent un diamètre compris entre 1 et 7 mm et préférentiellement de l'ordre de 1,5 mm.

Le fluide de lavage sous pression est de préférence de l'air comprimé ou surpressé.

Comme le montre la figure 1, les moyens supports de la rampe comprennent ici deux câbles de support 202, 203 s'étendant sur toute la longueur du décanteur et maintenus sous tension au moins à une de leurs extrémités.

Ces câbles 202, 203 de support de la rampe de distribution d'air 201 sont avantageusement réalisés en fibres de matériau plastique de type polyamide ayant un coefficient linéique très faible pour des températures d'eaux situées entre 5 et 30 degrés.

Comme le montre cette figure, chaque câble 202, 203 est fixé à une extrémité 202", 203" à une paroi 103 de la cuve du décanteur et est maintenu sous tension à son autre extrémité 202', 203' à l'aide d'un ressort mécanique ou d'un contre poids.

Ces ressorts mécaniques ou contre poids sont situés en partie supérieure de la cuve (101), il est donc nécessaire qu'une partie des câbles de support remonte verticalement vers le haut de la cuve, ce qui est réalisé à l'aide de poulies de renvoi 1.

En outre, il est prévu des moyens pour déplacer ladite rampe 201 le long du décanteur et des moyens d'alimentation en fluide sous pression de la rampe 201 couplés à cette dernière.

Plus particulièrement, les moyens pour déplacer la rampe le long du décanteur comprennent au moins un câble de traction 204 lié d'une part à ladite rampe 201 et d'autre part un système de treuil 205 situé à l'extérieur du décanteur 100 sur les bords supérieurs de la cuve 101.

Ce système de treuil autour duquel est enroulé le câble de traction 204 est actionnable manuellement ou automatiquement. On peut prévoir à cet effet, une motorisation électrique ou pneumatique du système de treuil.

Le câble de traction formant moyens de déplacement de la rampe peut être relié à un pont écumeur prévu dans certains décanteurs et non prévu dans le décanteur représenté.

Ce câble de traction est constitué également de fibres en polyamide d'une force de traction de plus de 1000daN.

Il est prévu également des poulies de renvoi 1 permettant d'amener le câble de traction 204 vers le treuil 205. Ces poulies de renvoi 1, sont réalisées par exemple en polyamide.

Dans une variante de réalisation non représentée, on peut prévoir que le système de traction de la rampe sur les câbles de support soit placé plus bas que les câbles de support de manière à ce qu'à l'extrémité du décanteur, la rampe ne soit pas gênée pour pouvoir se situer en regard des lamelles ou éléments tubulaires situées aux extrémités du décanteur.

La vitesse de déplacement de la rampe est avantageusement de l'ordre de 1 à 10 cm/s.

Les moyens d'alimentation en fluide sous pression de la rampe comprennent avantageusement ici une tuyauterie d'alimentation 206 associée à un système d'enroulement ou de guirlande 207 et une source de production d'air comprimé ou surpressé 208.

La tuyauterie d'alimentation arrive à l'aide d'une poulie de renvoi 1 au niveau de la rampe 201 pour transporter l'air comprimé ou surpressé produite par la source.

La tuyauterie d'alimentation 206 en air comprimé ou surpressé est réalisée en matière souple par exemple du caoutchouc synthétique armé pour résister à la pression et à la traction.

Selon l'invention, le procédé de lavage du décanteur à l'aide du dispositif décrit ci-dessus comporte les étapes suivantes.

On arrête l'arrivée d'eau sur le décanteur 100. On met en fonctionnement du dispositif de lavage précité par injection d'air et mise en mouvement à une vitesse constante de la rampe de distribution.

Il est à noter qu'il est prévu au moins deux aller-retour de la rampe de distribution entre les deux extrémités longitudinales du décanteur pour que le lavage des lamelles ou des éléments tubulaires soit réalisé de manière efficace.

Puis, on met au repos le décanteur pendant une durée d'environ comprise entre 10 et 30 mn pour permettre une décantation des boues séparées des lamelles ou des éléments tubulaires du décanteur.

On extrait les boues décantées (à l'aide d'un racleur par exemple) et on remet en fonctionnement le décanteur.

A l'aide du dispositif de lavage tel que précité qui est simple, facile à mettre en ceuvre et agit de manière efficace et rapide, il est possible avantageusement de prévoir un décanteur qui utilise des lamelles ou éléments tubulaires présentant des surfaces plus rugueuses, ce qui permet d'augmenter leur efficacité de séparation des particules de l'eau, mais qui par ailleurs s'encrassent plus facilement.

Il est également possible d'envisager un décanteur avec des lamelles ou des éléments tubulaires plus rapproché(e)s, ce qui permet aussi d'améliorer son efficacité. L'encrassement plus rapide des lamelles rapprochées n'est plus un problème puisqu'un tel décanteur intègre le dispositif de lavage précité qui permet de laver lesdites lamelles rapidement et efficacement.

## Revendications

1. Dispositif de lavage de lamelles ou d'éléments tubulaires (105) d'un décanteur (100) utilisé pour la séparation liquide/solide et en particulier pour le traitement des eaux, **caractérisé en ce qu'**il comprend :
- au moins une rampe (201) de distribution de fluide de lavage sous pression, disposée en dessous et à proximité des lamelles ou des éléments tubulaires (105), ladite rampe (201) étant apte à coulisser sur des moyens supports comprenant au moins deux câbles de support (202, 203) s'étendant sur la longueur du décanteur et maintenus sous tension au moins à une extrémité,
- des moyens pour déplacer ladite rampe (201) le long du décanteur (101), comprenant au moins un câble (204) relié à ladite rampe et à un système de treuil (205) actionnable manuellement ou automatiquement, et
- des moyens d'alimentation en fluide de lavage sous pression (205, 206) de la rampe (201), couplés à cette dernière.

2. Dispositif selon la revendication 1, **caractérisé en ce que** la rampe de distribution (201) s'étend transversalement à la direction longitudinale du décanteur.

3. Dispositif selon la revendication 2, **caractérisé en ce que** la rampe (201) s'étend sur toute la largeur du décanteur.

4. Dispositif selon l'une des revendications 1 à 3, **caractérisé en ce que** le fluide de lavage est de l'air comprimé ou surpressé.

5. Dispositif selon la revendication 4, **caractérisé en ce que** les moyens d'alimentation en air comprimé ou surpressé comprennent une tuyauterie d'alimentation (206) associée à un système d'enroulement ou de guirlande (207), et une source (208) de production d'air comprimé ou surpressé.

6. Dispositif selon l'une des revendications 1 à 5, **caractérisé en ce que** la rampe d'alimentation (201) se présente sous la forme d'un tube ou d'un ensemble de tubes pourvu(s) en partie inférieure de trous d'évacuation de fluide de lavage sous pression, les trous d'évacuation étant régulièrement répartis sur toute la longueur de la rampe.

7. Dispositif selon la revendication 6, **caractérisé en ce que** les trous d'évacuation de fluide sous pression sont espacés d'une distance comprise entre 5 et 20 cm, et présentent un diamètre compris environ entre 1 et 7 mm, préférentiellement de l'ordre de 1,5 mm.

8. Dispositif selon l'une quelconque des revendications 1 à 7, **caractérisé en ce que** la rampe de distribution (201) se déplace à une vitesse comprise environ entre 1 et 10 cm/s.

9. Procédé de lavage de lamelles ou d'éléments tubulaires d'un décanteur utilisé pour la séparation liquide/solide et en particulier pour le traitement des eaux, à l'aide du dispositif de lavage selon l'une des revendications 1 à 8, **caractérisé en ce qu'**il comprend les étapes suivantes :
- arrêt de l'arrivée d'eau sur le décanteur,
- injection de fluide de lavage sous pression dans la rampe de distribution du dispositif de lavage,
- mise en mouvement de ladite rampe de façon à ce qu'elle effectue au moins deux aller-retour entre les deux extrémités longitudinales du décanteur,
- mise au repos du décanteur pendant une durée comprise entre 10 et 30 minutes environ, pour permettre une décantation des boues séparées des lamelles ou des éléments tubulaires du décanteur,
- extraction des boues décantées et remise en fonctionnement du décanteur.

10. Décanteur lamellaire (100) pour la séparation liquide/solide et en particulier pour le traitement des eaux, **caractérisé en ce qu'**il comprend :
- une pluralité d'éléments tubulaires (105), reposant sur un support horizontal (104), juxtaposé(e)s suivant la longueur du décanteur et présentant une inclinaison par rapport à l'horizontale comprise entre 55 et 60 degrés,
- des goulottes de récupération d'eau disposées au-dessus des éléments tubulaires, et
- le dispositif de nettoyage selon l'une des revendications 1 à 8.

## Claims

1. Device for washing lamellae or tubular elements (105) of a settler (100) used for liquid/solid separation and in particular for water treatment, **characterized in that** it comprises:
- at least one pressurized washing fluid spray manifold (201), disposed below and near the lamellae or tubular elements (105), said manifold (201) being suitable to slide on support means comprising at least two support cables (202, 203) extending along the length of the settler and maintained under tension at at least one end,
- means for moving said manifold (201) along the settler (101), comprising at least one cable (204) connected to said manifold and to a manually or automatically actuatable winch system (205), and
- means for supplying pressurized washing fluid (205, 206) to the manifold (201) coupled with said manifold.

2. Device according to Claim 1, **characterized in that** the spray manifold (201) extends across the lengthwise direction of the settler.

3. Device according to Claim 2, **characterized in that** the manifold (201) extends along the whole width of the settler.

4. Device according to one of Claims 1 to 3, **characterized in that** the washing fluid is compressed or overpressurized air.

5. Device according to Claim 4, **characterized in that** the supply means of compressed or overpressurized air comprise a feed pipe (206) associated with a winding or garland system (207), and a compressed or overpressurized air production source (208).

6. Device according to one of Claims 1 to 5, **characterized in that** the feed manifold (201) takes the form of a tube or of a set of tubes provided at the bottom with drainage holes for pressurized washing fluid, the drainage holes being uniformly distributed along the whole length of the manifold.

7. Device according to Claim 6, **characterized in that** the pressurized fluid drainage holes have a spacing between 5 and 20 cm, and present a diameter between about 1 and 7 mm, preferably about 1.5 mm.

8. Device according to any one of Claims 1 to 7, **characterized in that** the spray manifold (201) travels at a speed between about 1 and 10 cm/s.

9. Method for washing lamellae or tubular elements of a settler used for liquid/solid separation and in particular for water treatment, using the washing device according to one of Claims 1 to 8, **characterized in that** it comprises the following steps:
- shutoff of the water supply to the settler,
- injection of pressurized washing fluid into the spray manifold of the washing device,
- setting of said manifold in motion so that it makes at least two return trips between the two longitudinal ends of the settler,
- placing of the settler at rest for a time interval between about 10 and 30 minutes, to allow settling of the separated sludges from the lamellae or the tubular elements of the settler,
- removal of the settled sludges and re-starting of the settler.

10. Lamellar settler (100) for liquid/solid separation and in particular for water treatment, **characterized in that** it comprises:
- a plurality of tubular elements (105), resting on a horizontal support (104), juxtaposed along the length of the settler and presenting an inclination of between 55 and 60 degrees to the horizontal,
- water recovery chutes disposed above the tubular elements, and
- the cleaning device according to one of Claims 1 to 8.

## Patentansprüche

1. Vorrichtung zum Waschen von Lamellen oder Röhrenelementen (105) eines Nachklärbeckens (100), das zur Flüssig/Fest-Trennung und insbesondere zur Wasseraufbereitung verwendet wird, **dadurch gekennzeichnet, daß** sie umfaßt:
- wenigstens ein Gestell (201) zur Verteilung von unter Druck stehendem Waschfluid, das unterhalb und nahe der Lamellen oder der Röhrenelemente (105) angeordnet ist, wobei das Gestell (201) derart ausgelegt ist, daß es auf Tragemitteln gleitet, die wenigstens zwei Tragekabel (202, 203) umfassen, die sich über die Länge des Nachklärbeckens erstrecken und wenigstens an einem Ende unter Spannung gehalten werden,
- Mittel zur Verschiebung des Gestells (201) entlang des Nachklärbeckens (101), die zumindest ein Kabel (204) umfassen, das mit dem Gestell und einem Windensystem (205) verbunden ist, das manuell oder automatisch betätigt werden kann, und
- mit dem Gestell (201) in Verbindung stehende Mittel (205, 206), um dieses mit unter Druck stehendem Waschfluid zu versorgen.

2. Vorrichtung nach Anspruch 1, **dadurch gekennzeichnet, daß** sich das Verteilergestell (201) quer zur Längsrichtung des Nachklärbeckens erstreckt.

3. Vorrichtung nach Anspruch 2, **dadurch gekennzeichnet, daß** sich das Verteilergestell (201) über die gesamte Breite des Nachklärbeckens erstreckt.

4. Vorrichtung nach einem der Ansprüche 1 bis 3, **dadurch gekennzeichnet, daß** das Waschfluid Druckluft oder Pressluft ist.

5. Vorrichtung nach Anspruch 4, **dadurch gekennzeichnet, daß** die Mittel zur Versorgung mit Druckluft oder Pressluft ein Rohrleitungsversorgungssystem (206) umfassen, das mit einem Aufwickel- oder Girlandensystem (207) verbunden ist, sowie eine Quelle (208) zur Erzeugung von Druckluft oder Pressluft.

6. Vorrichtung nach einem der Ansprüche 1 bis 5, **dadurch gekennzeichnet, daß** das Versorgungsgestell (201) als Röhre oder als Röhrenanordnung ausgebildet ist, die im unteren Teil mit Abflußlöchern für das unter Druck stehende Waschfluid versehen ist (sind), wobei die Abflußlöcher regelmäßig über die gesamte Länge des Gestells verteilt sind.

7. Vorrichtung nach Anspruch 6, **dadurch gekennzeichnet, daß** die Abflußlöcher für das unter Druck stehende fluid durch einen Abstand von 5 bis 20 cm beabstandet sind und einen Durchmesser von ungefähr 1 bis 7 mm, vorzugsweise in der Größenordnung von 1,5 mm, aufweisen.

8. Vorrichtung nach einem der Ansprüche 1 bis 7, **dadurch gekennzeichnet, daß** sich das Versorgungsgestell (201) mit einer Geschwindigkeit verschiebt, die ungefähr zwischen 1 und 10 cm/s liegt.

9. Verfahren zum Waschen von Lamellen oder Röhrenelementen eines Nachklärbeckens, das zur Flüssig/Fest-Trennung und insbesondere zur Wasseraufbereitung mittels der Waschvorrichtung gemäß einem der Ansprüche 1 bis 8 verwendet wird, **dadurch gekennzeichnet, daß** es folgende Schritte umfaßt:
- Unterbrechen der Wasserzufuhr zum Nachklärbecken,
- Einspritzen von Waschfluid unter Druck in das Verteilergestell der Waschvorrichtung,
- Inbewegungsetzen des Gestells derart, daß es sich zumindest zweimal zwischen den beiden Längsenden des Nachklärbeckens hin und her bewegt,
- Stillegung des Nachklärbeckens für eine Dauer von ungefähr 10 bis 30 Minuten, um die Klärung der Schlämme zu ermöglichen, die von den Lamellen oder Röhrenelementen des Nachklärbeckens getrennt wurden,
- Entnahme der Klärschlämme und Wiederinbetriebsetzung des Nachklärbeckens.

10. Lamellen-Nachklärbecken (100) zur Flüssig/Fest-Trennung und insbesondere zur Wasseraufbereitung, **dadurch gekennzeichnet, daß** es aufweist:
- mehrere Röhrenelemente (105), die auf einem waagerechten Träger (104) aufliegen, entlang des Nachklärbeckens aneinandergereiht sind und eine Neigung von 55 bis 60 Grad zur Horizontale aufweisen,
- über den Röhrenelementen angeordnete Rinnen zur Wasserrückgewinnung, und
- die Waschvorrichtung gemäß einem der Ansprüche 1 bis 8.
